# EUROPÄISCHE PATENTANMELDUNG

(11) **EP 1 344 987 A2**
(43) Veröffentlichungstag der Anmeldung: **17.09.2003**
(21) Anmeldenummer: 03005659.2
(22) Anmeldetag: 13.03.2003
(51) Int. Cl.: F24D 3/16

(54) **Flächenheiz- und Kühlelement**

(30) Priorität: 15.03.2002 DE 10211469
(71) Anmelder: Funk, Klaus, 99610 Sömmerda (DE)
(72) Erfinder: Funk, Klaus, 99610 Sömmerda (DE)
(74) Vertreter: Enders, Hans, Dipl.-Ing.

(57) **Zusammenfassung**

Ein Flächenheiz- und Kühlelement aus einzelnen Gipsplatten und mäanderförmigen Kapillarrohrmatten und einer Dämmung besteht aus einzelnen Deckenelementen (1 bis 8) in einem Verbund einer Gipsplatte (1) mit rückseitig aufgesetzten Abstandshaltern (3) und Aretierungsklötzchen (4), sowie mehreren zwischen den Abstandshaltern (3) angeordneten Kapillarrohrmatten (2) mit abdeckender Dämmung (7), wobei die Dämmung (7) mit einer Feuerschutzplatte (16) oder einer PE-Folie (8) abgedeckt ist, die mit den Abstandshaltern (3) fest verbunden sind und der Plattenverbund (1, 3, 16) Durchgangslöcher für Befestigungselemente (13) bei der Deckenmontage aufweist. Die Abstandshalter (3) sind randbündig mit der Thermoplatte (1) und die Aretierungsklötzchen (4) zur Aufnahme der Rohre (9, 10) für Vorund Rücklauf und Verbindungsschlauch (11) in die Flächenebene der Thermoplatte (1) eingerückt befestigt.

## Beschreibung

Die Erfindung betrifft ein Flächenheiz- und Kühlelement aus einzelnen Sandwichelementen, die dem Wärmetausch dienen und zu einer Raumdecke oder einer Wandfläche zusammengefügt und an ein wasserführendes Heizungssystem angeschlossen werden. Je nach Vorlauftemperatur sind die Sandwichelemente zur Raumheizung oder zur Raumkühlung eingesetzt. Konventionelle Klimaanlagen mit einem Gebläse erreichen oft nicht den geforderten Komfort, denn durch die Luftströme wird die Raumtemperatur zwar gesenkt, Staub und andere sich in der Luft befindliche Partikel werden jedoch durch den Raum gewirbelt. Dadurch wird das Wohlbefinden in diesen Räumen erheblich gestört.

Es sind daher Kühl- und Heizdeckensysteme entwickelt worden, bei denen die Wärme im Raum durch Rohrschlangen bzw. Kapillarrohrmatten verteilt wird. Hierbei werden im wesentlichen folgende Systeme unterschieden:
1. Rohrschlangen bzw. Kapillarrohrmatten werden direkt in die Betondecken verlegt. Nachteil dabei ist. dass eine sehr sorgfältige Verlegung notwendig ist und Reparaturen oder Änderungen nicht ohne Zerstörung der Betondecke möglich ist.
2. Kapillarrohrsysteme werden direkt oder an Unterkonstruktionen von Raumdecken befestigt, miteinander verbunden und danach mit Verkleidungsplatten abgedeckt. Dabei handelt es sich meist um abgehängte Kasettendecken. Nachteilig dabei ist die Vormontage der Kühlmalten auf demontierbaren Kasettendecken an der Rohdecke durch einen Sanitär- und/oder Heizungs-Monteur und die anschließende Montage der Verkleidungsplatten durch einen Trockenbauer. Diese Systeme sind anfällig und entsprechen nicht gehobenen Ansprüchen.
3. Die Kapillarrohrmatten bzw. Rohrschlangen werden auf ebenen bzw. gelochten Gipskartonplatten verlegt und an einem CD-Deckenrost befestigt und danach vom Trockenbauer mit Verkleidungsplatten abgedeckt. Neben einer in mehreren Schritten erfolgenden Montage, besteht dabei die Gefahr, dass die bereits montierten Kühlmatten bei der Montage der Verkleidungsplatten durch den Trockenbauer beschädigt werden.

In weiteren Veröffentlichungen sind dazu folgende Details bekannt geworden:

In der DE 94 10 695.9 sind die Kühlelemente in einzelnen Stahlrahmen angeordnet, die an der Unterkonstruktion über Scharniere schwenkbar befestigt sind, um nach einer Montage wieder eine bessere Zugänglichkeit des Rohrsystems zu erreichen. Die einzelnen Kühlelemente oder -matten sind dazu untereinander bzw. über eine Sammelschiene an Verbindungsleitungen angeschlossen. Nachteilig: dabei sind das Erfordernis von Metallrahmenkonstruktionen mit Scharnieren und ein hoher Montageaufwand, wobei die vorgenannten Nachteile der nachträglichen Montage der Abdeckplatten nicht beseitigt sind.

In der DE 296 08 709 U1 ist ein Heizkörper als Wandelement für den Trockenbau beschrieben, bei dem Metallrohre in einer in der Verkleidungsplatte vorgefertigten mäanderlörmigen Rinne oder Nut eingelegt und mit einer Blechplatte abgedeckt sind. Die Blechplatte dient dabei als Konvektor für einen besseren Wärmeübergang. Die Blechplatte wiederum ist mit einer Sperrholzplatte oder einer Gipskarton-Platte verbunden. Nachteilig dabei sind die Aufwendungen für die Einbringung des mäanderförmigen Profils der Rinne in die vordere Gipskartonplatte, sowie der hohe Montageaufwand für das Einlegen der flexiblen Heizrohre in die Nuten. Durch die Einformungen von Rinnen in der Platte verliert die Abdeckplatte außerdem an Stabilität.

In der DE 295 02 445.3 U1 wird eine Kühldecke beschrieben, die insbesondere als abgehängte Kühldecke aus einzelnen Plattenelementen besteht. Die Kühlrohre sind dazu bereits bei der Fertigung der Gipkartonplatte in diese eingeformt und vollständig von der Gipskartonplatte umschlossen und an deren Oberfläche nicht mehr sichtbar. Zur Verstärkung dieser speziellen Platte ist eine weitere handelsübliche Gipskartonplatte aufgelegt und insgesamt in diesem Verbund mit einer Metallummantelung versehen.
Diese Lösung ist speziell für abgehängte Decken vorgesehen und hinsichtlich der Metallummantelung zwar dekorativ, aber sehr aufwendig. Für Niedrigdecken ist die Konstruktion nicht geeignet, da alle Rohrverbindungen über der Plattenebene erfolgen..

Der Erfindung liegt die Aufgabe zugrunde, ein Flächenheiz- und Kühlelement zur Decken- oder Wandstrahlungs- Heizung bzw. -Kühlung zu entwickeln, bei dem der Platzbedarf im Deckenhohlraum oder Wandbereich minimiert wird, die Raumdecke oder Wand in einem Montageschritt zusammengefügt und an ein Kühlmitteloder Heizleitungssystem angeschlos- sen werden kann. Eine weitere Aufgabe besteht darin, die Montage der Flächenelemente zu vereinfachen und die Anforderungen an den Schall- und Brandschutz mit geringem Aufwand zu erfüllen.

Die Aufgabe der Erfindung wird dadurch gelöst, dass auf eine GK-Thermoplatte Abstandshalter und Aretierungsklötzchen mit einer Klebeverbindung aufgebracht werden, wobei sich der Abstand zwischen den Abstandhaltern nach der Stabilität der verwendeten GK-Thermoplatte richtet. Zwischen den Abstandshaltern und Aretierungsklötzchen wird die Kapillarrohrmatte aufgelegt und an der GK-Thermoplatte fixiert. Rückseitig wird die Kapillarrohrmatte mit einer Dämmung, z.B. mit Mineralwolle, abgedeckt. Die Mineralwolle wiederum wird durch eine PE-Folie abgedeckt und durch diese gehalten. Die Befestigung der PE-Folie ist durch Klammern an den Abstandshaltern und Aretierungsklötzchen relisiert. Auf jeder Platte befindet sich jeweils auf einer Seite zwischen den Abstandshaltern und den Aretierungsklötzchen der Vor- bzw. der Rücklauf mit einem T-Verbindungsstück.

Zur Erfüllung besonderer Anforderungen an die Schallabsorbtion in dem betreffenden Raum erfolgt der Einsatz einer geschlitzten oder gelochten GK-Thermoplatte.
Zur Erfüllung der Brandschutzklassen F 30 bis F 90 werden bei diesen Deckenelementen die GK-Thermoplatte und die PE-Folie durch Feuerschutzplatten ersetzt.
Der Ersatz in der einzelnen Brandschutzklasse erfolgt bei
- F30 durch 10 bzw. 12.5 mm dicke Feuerschutzplatten
- F60 durch 15 mm dicke Feuerschutzplatten
- F30 durch einen Elementeaufbau wie in der Brandschutzklasse F 30, aber mit einer zusätzlichen Beplankung des CD-Rostes mit einer 25 mm dicken Feuerschutzplatte.

Mit einer zusätzlichen Auflage mit Mineralwolle d=40 mm und Mindestrohdichte 40 kg/m³ wird zusätzlich die Brandbeanspruchung von oben erfüllt.

Zur Ausführung einer selbständigen Brandschutzdecke F 30 mit schallabsorbierender Wirkung ist die untere Platte das bereits beschriebene gelochte oder geschlitzte Plattenelement.

Das Klimadecken- und Wandelement wird also vollständig aus GK-Platten mit den Kapillarrohrmatten vormontiert, wobei die Abstandshalter und Aretierungsklötzchen vom Rand aus soweit in die Plattenebene eingerückt sind, dass das Vorlauf- und Rücklaufrohr sowie die Verbindungselemente benachbarter Kapillarrohrmatten in die Plattenebene eingefügt sind und keinen zusätzlichen Platz zur Betondecke hin benötigen. Die Verbindungselemente benachbarter Kapillarrohrmatten bestehen dabei aus Flexschläuchen, die mittels Steckverbindung montiert sind. Bei der Vormontage der Flächenheiz- und Kühlelemente erhalten die Plattenstapel die Durchgangsbohrungen im Bereich der Abstandshalter für die Montage am CD-Deckenrost bzw. Wand so dass es bei der Decken- oder Wandmontage nicht zu Beschädigungen der Kapillarrohre für das Heiz-/ Kühlsystem kommen kann.

Die nach Flächen- bzw. Deckenplan verlegten Flächenheiz- und Kühlelemente erlauben spätere Änderungen oder Serviceleistungen an den Kapillarrohrmatten und einen einfachen Austausch einzelner Klimadecken- bzw. Wandelemente. Mit dem vorgeschlagenen Flächenheiz- und Kühlelement sind, was den Abstand zur Rohdecke betrifft platzsparende Deckenkonstruktionen, zu realisieren. Die Montageund damit die Investitionskosten können mit dem erfindungsgemäßen Flächenheizund Kühlelement erheblich gesenkt werden.

Der der Erfindung zugrundeliegende Gedanke wird in der nachfolgenden Beschreibung anhand eines Ausführungsbeispieles, das in der Zeichnung dargestellt ist, näher erläutert.
Es zeigt:
- Fig. 1: eine Prinzipdarstellung einer Klimadecke mit GK-Thermoplatten als Flächenheiz- und Kühlelement im Schnitt;
- Fig. 2: eine Prinzipdarstellung des Flächenheiz- und Kühlelementes als Feuerschutzplatte im Schnitt;
- Fig. 3: eine vergrößerte Prinzipdarstellung der Klimadecke mit Flächenheiz- und Kühlelementen gemäß Fig.1 mit Plattenstoß benachbarter Platten;
- Fig. 4: eine vergrößerte Prinzipdarstellung der Klimadecke mit Flächenheiz- und Kühlelementen gemäß Fig.2 mit Plattenstoß benachbarter Platten als Feurschutzplatte;
- Fig. 5: eine Draufsicht auf ein Flächenheiz- und Kühlelement für eine Deckenmontage gemäß Fig. 1 - ohne Dämmung:
- Fig. 6: eine Draufsicht auf ein Flächenheiz- und Kühlelement für eine Deckenmontage gemäß Fig. 2 ,
- Fig. 7: einen Verlegeplan mehrerer miteinander verbundener Flächenheiz- und Kühlelemente für eine Klimadecke - Rückansicht;
- Fig. 8: einen vergrößerten Ausschnitt eines Flächenheiz- und Kühlelementes mit Anschluß für die Kapillarrohrmatte und Durchführung des Vor- bzw. Rücklaufrohres;
- Fig. 9: mehrere nebeneinander angeordnete Flächenheiz- und Kühlelemente für eine Raumwand,
- Fig. 10: Flächenheiz- und Kühlelemente für eine Raumwand mit schwenkbarem Überbrückungsstücken und Anschluß für Vor- und Rücklauf,
- Fig. 11: Flächenheiz- und Kühlelemente für eine Raumwand mit schwenkbarem Überbrückungsstücken und Anschluß für Vorlauf und Plattenverbindung;

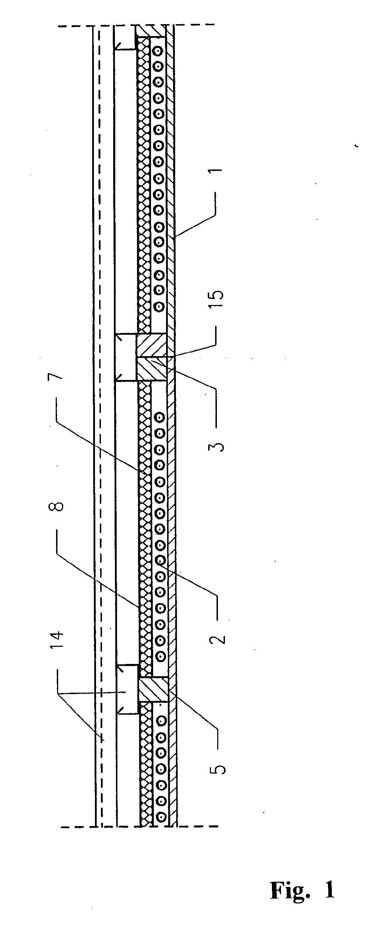

Fig. 1 zeigt eine einfache Ausführung eines vormontierten Flächenheiz- und Kühlelementes für eine Deckenmontage mit einer GK-Thermoplatte 1, auf die im Randbereich Abstandshalter 3 aufgeklebt sind. Die Abstandshalter 3 bestehen zweckmäßig aus ein oder mehreren Streifen einer GK-Platte. Zwischen die Abstandshalter 3 werden Kapillarrohrmatten 2 eingefügt und mit einer Dämmung 7 abgedeckt. Über die Dämmung 7 ist eine Abdeckfolie 8 verlegt, die auf den Abstandshaltern 3 befestigt, z.B. getackert, wird.
In dieses montierte Plattenpaket werden im Bereich der Abstandshalter 3 Durchgangsbohrungen für die Befestigung der Flächenheiz- und Kühlelemente an der Deckenunterkonstruktion 14 gesetzt. Eine Beschädigung der Kapillarrohrmatten 2 wird so bei der Montage der einzelnen Flächenheiz- und Kühlelemente und bei der Montage der Deckenelemente am CD-Deckenrost vermieden.

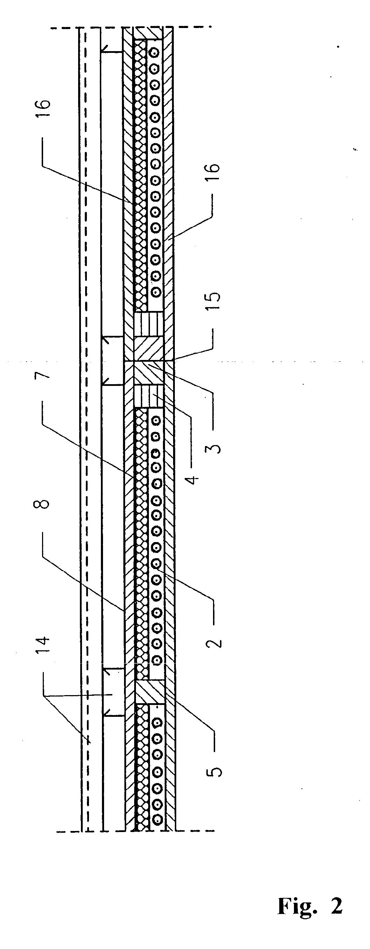

In Fig. 2 ist das vorgefertigte Flächenheiz- und Kühlelement beidseitig mit einer Feuerschutzplatte 16 versehen, womit die Anforderungen an eine der Brandschutzklassen erfüllt werden. Die Brandschutzklasse F 30 wird z.B. erreicht mit einer 12,5 mm und einer 10 mm dicken Feuerschutzplatte 16.

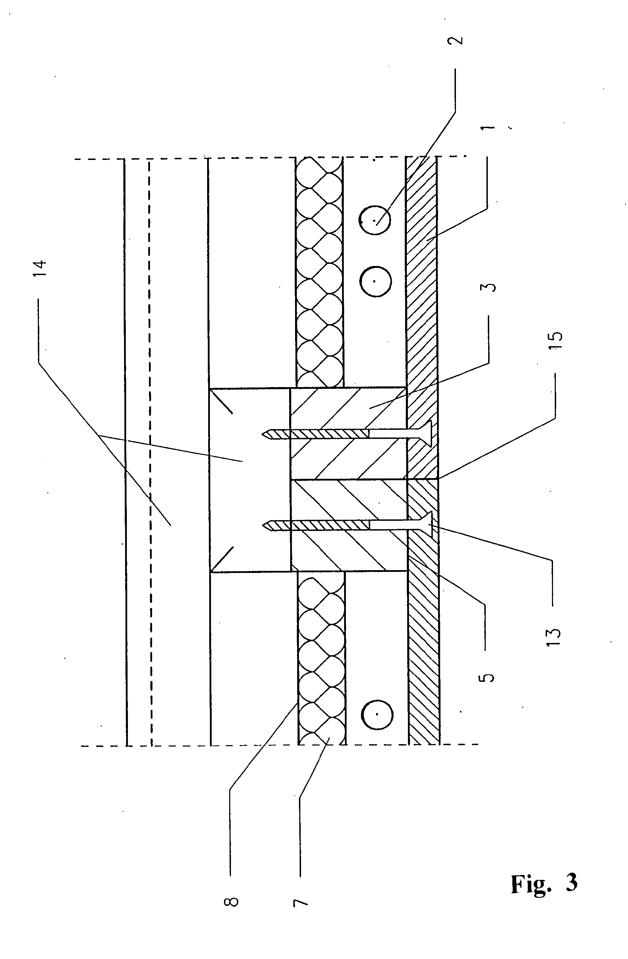

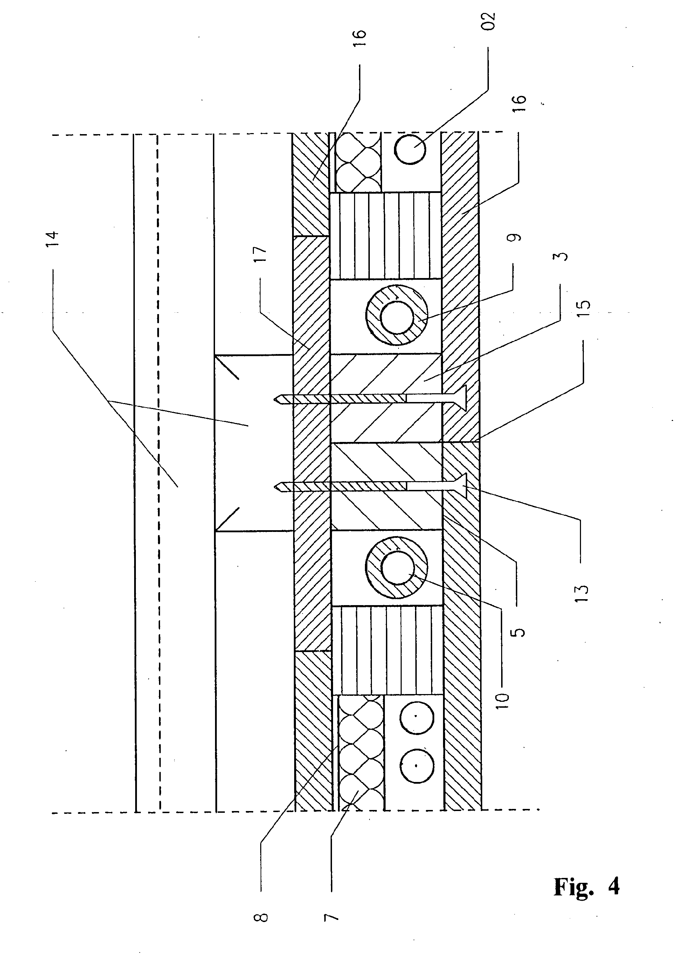

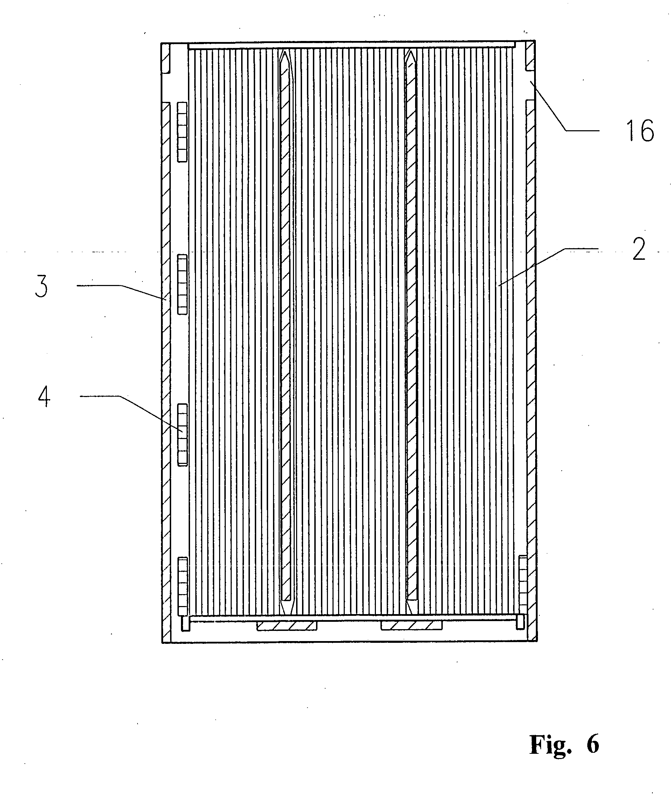

In Fig. 3 ist ein Plattenstoß nebeneinander angeordneter Flächenheiz- und Kühlelemente vergrößert dargestellt. Zusätzlich zu den Abstandshaltern 3 befinden sich mehrere Aretierungsklötzchen 4 zur Lagefixierung der Kapillarrohrmatten 2 und der Rohre 9; 10 für Vor- und Rücklauf auf der GK-Platte 1 (Fig. 6 bis 8). Diese sind soweit in die GK-Plattenebene versetzt, dass die Rohre 9 und 10 für Vor- und Rücklauf, aber auch die Verbindungsmittel 11 für die Kapillarrohrmatten 2 untereinander genügend Platz finden.
Die rückseitig angeordneten Feuerschutzplatten 16 bei Deckenelementen (Fig.4) mit einer Brandschutzklasse F 30 bis F 90, sind in ihrer Breite kleiner ausgeführt, damit die Rohre 9 und 10 für Vor- und Rücklauf bei der Montage an der Decke bzw. CD-Unterkonstruktion in die Ebene der Flächenheiz- und Kühlelemente eintauchen können. Mit einem Streifen einer GK-Platte als Zwischenstück 17 wird die entstehende Lücke bei der Montage an der Decke ausgefüllt.

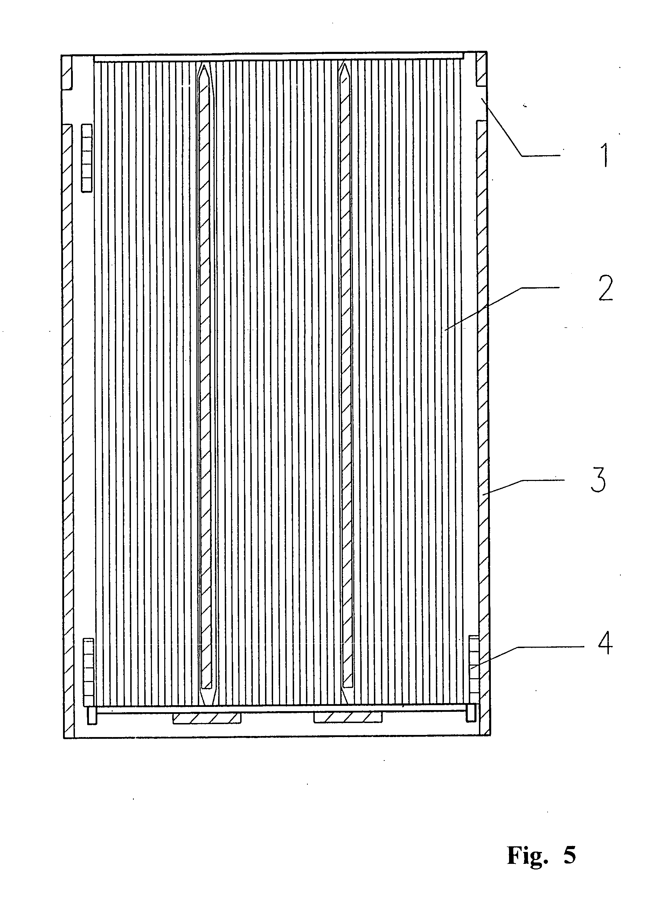

In Fig. 5 ist deutlich hervorgehoben, wie die Aretierungsklötzchen 4 und die Abstandshalter 3 auf der GK-Thermoplatte 1, sowie die Kapillarrohrmatten 2 angeordnet sind. Im Randbereich ist somit Platz für die Verbindungsschläuche 11 zwischen den einzelnen Flächenheiz- und Kühlelementen und auch für die Rohre 9 und 10 für den Vor- und Rücklauf.

In Fig. 6 sind mehrere Aretierungsklötzchen 4 angeordnet, da sie gleichzeitig Abstandshalter und Auflagepunkte für eine aufgesetzte Feuerschutzplatte 16 sind.

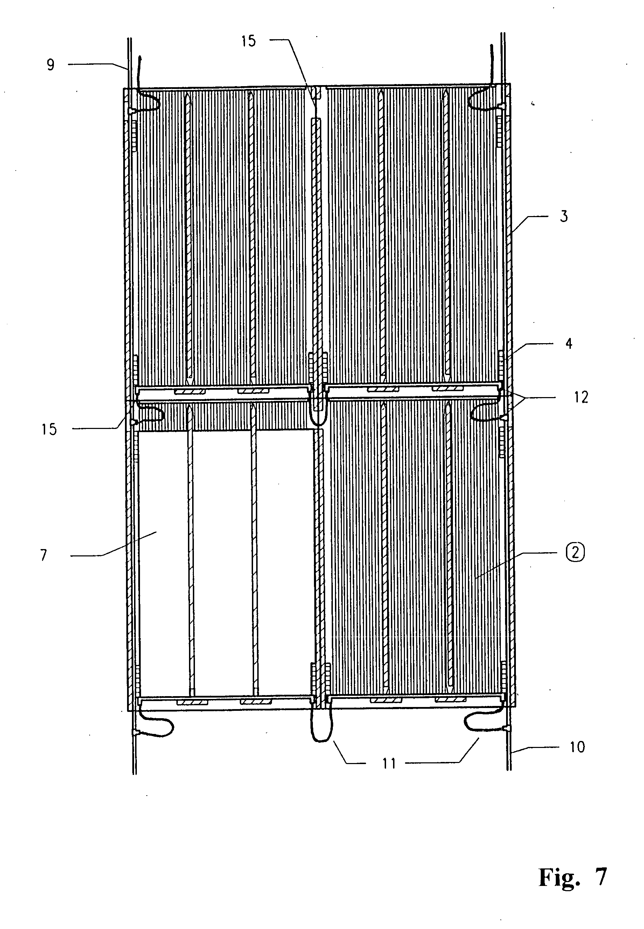

In Fig. 7 ist ein Verlegeplan und die Verbindungen mehrerer Flächenheiz- und Kühlelemente untereinander dargestellt. Die einzelnen Flächenheiz- und Kühlelemente werden mittels Flex-Schläuchen 11 mit lösbarer Steckverbindung verbunden und an die Rohre 9 und 10 für den Vor- und Rücklauf angeschlossen. Bei der Montage der Flächenheiz- und Kühlelementen am CD-Deckenrost besteht so genügend Bewegungsspielraum für den Monteur. Auch Service-Leistungen bzw. der Austausch einzelner Flächenheiz- und Kühlelemente ist problemlos durch Absenken und Lösen der Flex-Verbindungen möglich.

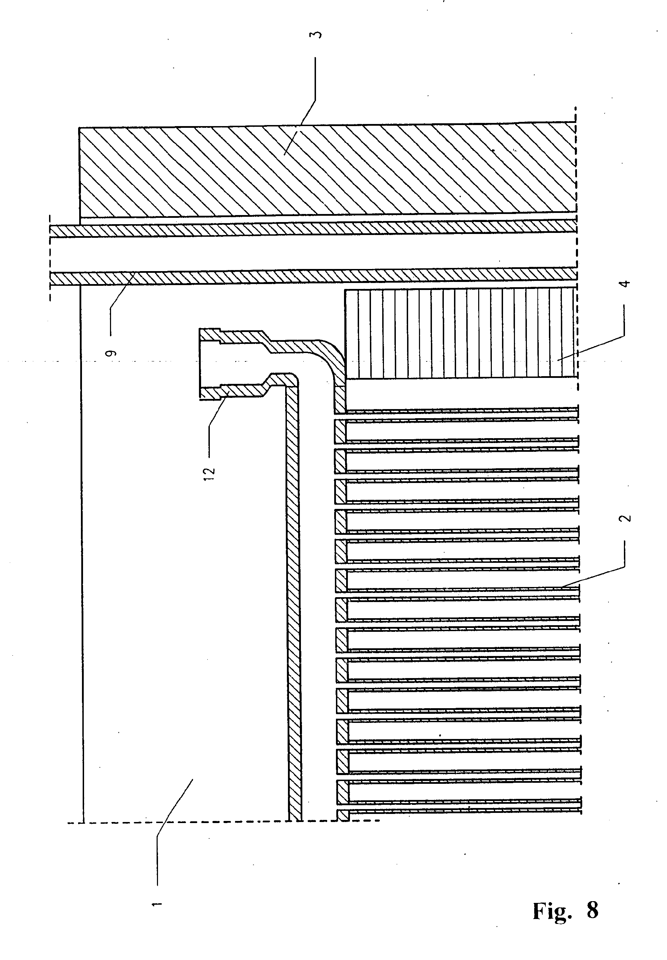

In Fig. 8 sind in einem Ausschnitt die in die Plattenebene eingerückten Steckmuffen 12 der Kapillarrohrmatten 2 näher erkennbar. Zwischen den Aretierungsklötzchen 4 und den Abstandshaltern 3 für den Plattenverbund besteht ausreichend Platz für die Rohre 9 und 10 für den Vor- und Rücklauf.

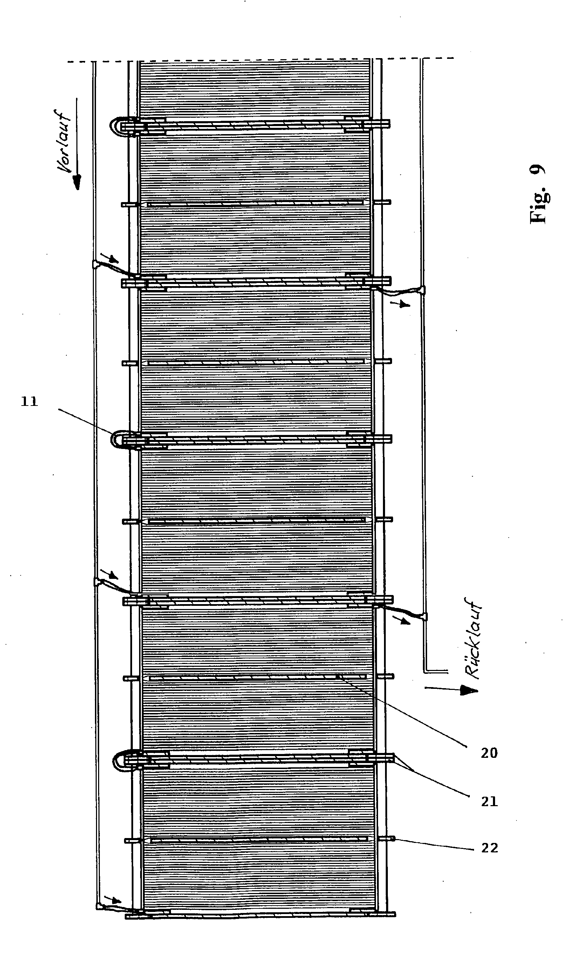

In Fig. 9 sind mehrere nebeneinander angeordnete Flächenheiz- und Kühlelemente für eine Raumwand dagestellt. Vor- und Rücklauf liegen in der Ebene der Flächenheiz- und Kühlelemente. Die einzelnen Platten weisen nach oben und unten hin mehrere Überbrückungsstücke 21, 22 auf, auf die sich die Anschlußplatten zur vollständigen Wandmontage abstützen.

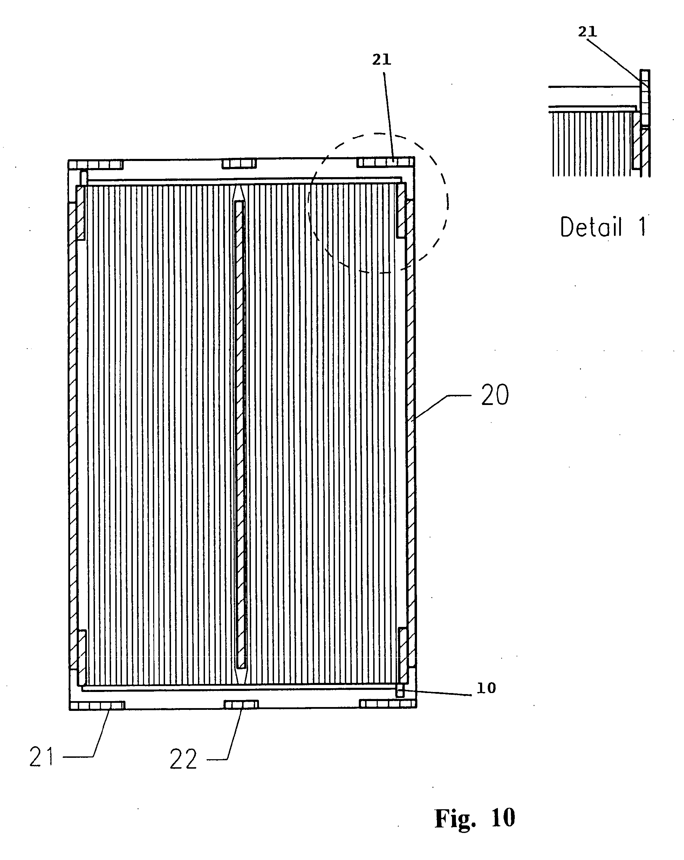

In Fig. 10 ist ein Flächenheiz- und Kühlelemente mit Anschluß für Vor-und Rücklauf und mehreren angeordneten Überbrückungsstücken 21, 22 dargestellt. Die Überbrückungsstücken 21, 22 sind in die Plattenebene eingeschwenkt und werden zu ihrem Schutz erst bei einer Montage ausgeschwenkt (Detail 1).

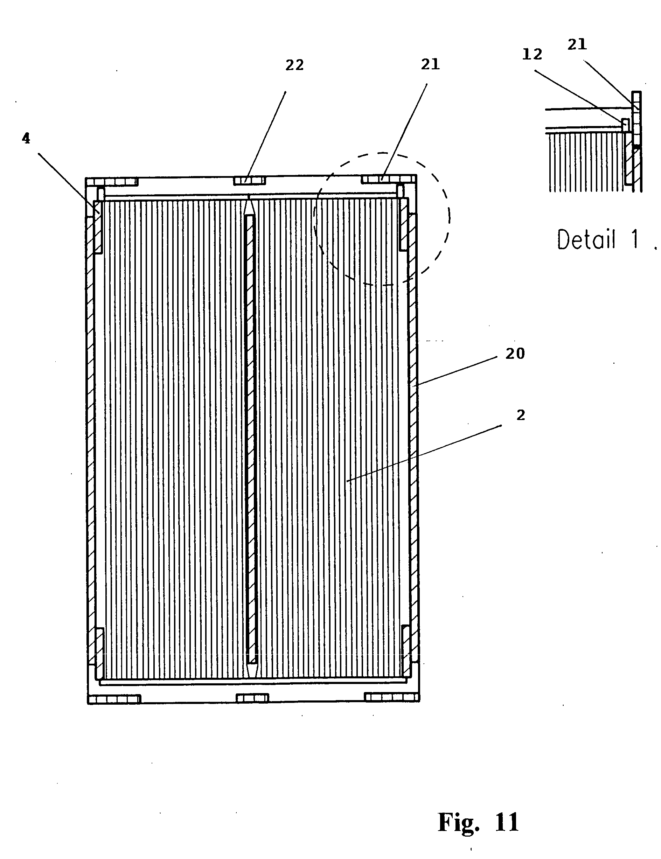

In Fig. 11 ist ein Flächenheiz- und Kühlelemente mit Anschluß für Vorlauf und einem Anschluß für eine Plattenverbindung dargestellt.

Die Erfindung hat den Vorteil eines einfach aufgebauten Flächenheiz- und Kühlelementes, das für eine Decken- und eine Wandmontage geeignet ist, raumsparend ist, eine vereinfachte Montage gewährleistet und die Anforderungen an den Schall- und Brandschutz mit geringem Aufwand erfüllt.

### Bezugszeichen:

- 1: GK-Thermoplatte
- 2: Kapillarrohrmatten
- 3: Abstandshalter
- 4: Aretierungsklötzchen
- 5: Klebverbindung
- 6: Fixierung der Kapillarrohrmatten
- 7: Dämmung
- 8: Abdeckfolie (PE-Folie)
- 9: Rohr (Vorlauf)
- 10: Rohr (Rücklauf)
- 11: Verbindungsmittel (Flexschlauch)
- 12: Steckmuffe
- 13: Befestigungselement
- 14: Deckenunterkonstruktion
- 15: Plattenstoß
- 16: Feuerschutzplatte (GFK)
- 17: Zwischenstück
- 20: Abstandshalter
- 21: Überbrückungsstück (lang)
- 22: Überbrückungsstück (kurz)

## Patentansprüche

1. Flächenheiz- und Kühlelement aus einzelnen Gipsplatten und mäanderförmigen Kapillarrohrmatten und einer Dämmung, **dadurch gekennzeichnet, dass** die einzelnen Decken- bzw. Flächenelemente (1 bis 8) aus einem Verbund einer Gipsplatte (1) mit rückseitig aufgesetzten Abstandshaltern (3) und Aretierungsklötzchen (4). sowie mehreren zwischen den Abstandshaltern (3) angeordneten Kapillarrohrmatten (2) mit abdeckender Dämmung (7) bestehen, wobei die Dämmung (7) mit einer Feuerschutzplatte (16) oder einer PE-Folie (8) abgedeckt ist, die mit den Abstandshaltern (3) fest verbunden sind und der Plattenverbund (1, 3, 16) im Bereich der Abstandshalter (3) Durchgangslöcher für die Befestigungselemente (13) bei der Decken- oder Wandmontage aufweist.

2. Flächenheiz- und Kühlelement nach Anspruch 1, **dadurch gekennzeichnet, dass** die Abstandshalter (3) randhündig mit der Thermoplatte (1) und die Aretierungsklötzchen (4) zur Aufnahme von Vor- und Rücklaufrohr (9, 10) und Verbindungsschlauch (11) in die Flächenebene der Thermoplatte (1) eingerückt befestigt sind.

3. Flächenheiz- und Kühlelement nach Anspruch 1 und 2, **dadurch gekennzeichnet, dass** die Anschlüsse für die Kapillarrohrmatten (2) Steckmuffen (12) sind und sich in der Ebene der Gipsplatte (1) angeordnet sind.

4. Flächenheiz- und Kühlelement nach Anspruch 1 bis 3, **dadurch gekennzeichnet, dass** die Kapillarrohrmalten (2) mit Flexschläuchen (11) miteinander verbunden sind.

5. Flächenheiz- und Kühlelement nach Anspruch 1 und 2, **dadurch gekennzeichnet, dass** die Abstandshalter (3) und die Aretierungsklötzchen (4) aus Gipskarton-Streifen bestehen.

6. Flächenheiz- und Kühlelement nach Anspruch 1, **dadurch gekennzeichnet, dass** die Klimadeckenelemente mit integrierten Vorlauf- bzw. Rücklaufrohr (9, 10) eine zur Breite der Gipsplatte (1) schmalere und zurückgesetzte Feuerschutzplatte (16) aufweisen.

7. Flächenheiz- und Kühlelement nach Anspruch 1 bis 6, **dadurch gekennzeichnet, dass** der vormontierte Plattenverbund (1, 3, 16) als Wandelement im Bereich seiner Ober- und Unterkante mehrere in der Plattenebene herausschwenkbare Überbrückungsstücke (21, 22) zur Anschlußmontage aufweist.

8. Flächenheiz- und Kühlelement nach Anspruch 1 und 7, **dadurch gekennzeichnet, dass** die äußere Gipskartonplatte (1) und die rückseitige Abdeckung (8) durch eine Glas- oder Kunststoffplatte austauschbar ist.
